# EUROPEAN PATENT SPECIFICATION

(11) **EP 3 255 703 B1**
(45) Date of publication and mention of the grant of the patent: **11.09.2019**
(21) Application number: 17172360.4
(22) Date of filing: 23.05.2017
(51) Int. Cl.: H01M 2/10, H01M 2/34, H01M 10/647, H01M 10/6555, H01M 10/613

(54) **BATTERY PACK**
BATTERIEPACK
BLOC-BATTERIES

(30) Priority: 08.06.2016 KR 20160070941
(43) Date of publication of application: 13.12.2017
(73) Proprietor: LG Electronics Inc., Yeongdeungpo-Gu Seoul 07336 (KR)
(72) Inventor: JEONG Sooji, 06772 Seoul (KR); KIM Dalhyun, 06772 Seoul (KR)
(74) Representative: Frenkel, Matthias Alexander

(56) References cited:
- EP-A1- 2 763 214
- EP-A1- 3 002 804
- EP-A2- 2 343 754
- DE-A1-102008 016 936
- KR-A- 20140 042 059
- KR-A- 20150 050 449
- US-A1- 2011 059 347

## Description

### BACKGROUND

The present invention relates to a battery pack, and more specifically a battery pack which includes a structure preventing a battery cell and a cooling cover from being short-circuited in a case where impact is applied to the battery pack.

The battery pack is a device that a plurality of battery cells for supplying power to the outside are assembled as an unit and is applied to and used to various industrial fields, such as mobile terminals, home appliances and an automobile.

Particularly, the battery pack may be mounted on and used to an electric vehicle traveling by a driving force outputted from a driving motor. The battery pack may be configured by being coupled a plurality of battery modules with each other. Each of the plurality of battery modules may includes at least one battery cells.

A cell lead may be includes in each of the battery cells.

The battery pack may further include a bus bar for connecting to the cell lead. The battery pack may connect to the plurality of battery cells in series or in parallel by the bus bar.

Meanwhile, the battery pack may be a cooling cover for cooling heat generating in the battery cell.

The battery pack may be deformed its shape in a case where impact is applied from the outside to the battery pack. In this case, the battery cell is short-circuited with the cooling cover by the impact.

In a case where the battery cell and the cooling cover is short-circuited with respect to each other, a fire may be generated. Accordingly, a structure that prevents the short-circuit is needed.

Document US 2011/059347 A1 discloses a plate-shaped battery cell including an electrode assembly of a cathode/separator/anode structure mounted in a battery case. A cathode terminal and an anode terminal protrude from the upper end and the lower end of the battery case. Said document further discloses a battery cartridge having the plate-shaped battery cell mounted therein and including a pair of plate-shaped frames for fixing the outer circumference of the battery cell in a state in which opposite major surfaces of the battery cell are exposed. In addition, elastic members are provided at the outsides of the frames and the battery cell is mounted between the frames. Moreover, said document discloses a battery module including eight cartridges, which are sequentially stacked, and four heat dissipation members disposed in interfaces between the cartridges.

Document EP 2 343 754 A2 discloses a battery cartridge having a plate-shaped battery cell mounted therein. Electrode terminals and of the battery cell protrude outward from the battery cartridge. Moreover, the battery cartridge includes a pair of plate-shaped frames configured to fix opposite sides of the battery cell at the edge thereof. The frames are provided at the outsides thereof with elastic pressing members, which extend in the longitudinal direction of the respective frames. The elastic pressing members extend in parallel to each other.

Document DE 10 2008 016936 A1 relates to an electrochemical energy store comprising a plurality of flat cells, each of which encompasses an electrolyte, at least two arresters, and a housing for the flat cell. The plurality of flat cells is arranged on top of one another like a stack on the flat sides that extend substantially parallel to each other. At least one cooling plate is disposed between two adjacent flat cells.

Document EP 2 763 214 A1 discloses a battery module including chargeable and dischargeable battery cells mounted in a module case, wherein the battery cells are mounted in the module case in a state in which the battery cells are stacked in a lateral direction in which electrode terminals are not located. The module case is configured to have a frame structure open at one or more surfaces thereof. The module case includes a receiving part to mount the battery cells, and a heat dissipation support member to dissipate heat from the battery cells through thermal conduction based on direct or indirect contact with the battery cells is mounted in the receiving part, in which the battery cells are mounted.

Document EP 3 002 804 A1 discloses a battery pack which improves coupling strength and space utilization of a plurality of battery modules. Further relevant documents are KR 2014 0042059 A and EP 3 062 361 A1.

### SUMMARY

The present invention provides a battery pack in which a plurality of battery modules are stacked, according to claim 1. At least one battery module of the plurality of battery modules includes at least one battery cell having a cell lead, a cartridge on which the battery cell is mounted, and a cooling cover which is coupled to the cartridge and covers the battery cell. The cartridge includes a seating portion on which the battery cell is seated and a pressing portion which is formed on the seating portion and presses one end of the cooling cover of the other neighboring battery module when an external force is applied to the seating portion.

### BRIEF DESCRIPTION OF THE DRAWINGS

Fig. 1 is a perspective view illustrating a battery pack according to an embodiment of the present invention,
Fig. 2 is a cross-sectional view illustrating the battery module and a connecting board assembly in Fig. 1,
Fig. 3 is an exploded perspective view illustrating a battery pack according to the embodiment of the present invention,
Fig. 4 is a perspective view illustrating in a case where an external impact is applied to the battery pack in Fig. 3,
Fig. 5A is a perspective view illustrating a cartridge and a cooling cover in Fig. 4,
Fig 5B is a perspective view illustrating in a case where the cooling cover in Fig. 5A is bent,
Fig. 6 is a perspective view illustrating the cooling cover according to the embodiment of the present invention,
Fig. 7 is a cross-sectional view illustrating a cross section of the battery pack in Fig. 4,
Fig. 8 is a front view illustrating a battery cell according to an embodiment of the present invention,
Fig. 9 is an enlarged view illustrating the cooling cover and the battery cell contacting the cooling cover,
Fig. 10A is a perspective view illustrating the cartridge according to an embodiment of the present invention,
Fig. 10B is an enlarged view of an E area according to the related art,
Fig. 10C is an enlarged view illustrating an embodiment of the E area according of the present invention,
Fig. 11A is a perspective view illustrating a separator according to an embodiment of the present invention,
Fig. 11B is an enlarged view a D area according to the related art,
Fig. 11C is an enlarged view illustrating an embodiment of the D area according of the present invention,
Fig. 11D is an enlarged view illustrating another embodiment of an D area according of the present invention,
Fig. 11E is an enlarged view illustrating another embodiment of an D area according of the present invention,
Fig. 12A is a perspective view illustrating an insulating sheet according to an embodiment of the present invention,
Fig. 12B is an enlarged view of a K area according to the related art,
Fig. 12C is an enlarged view illustrating an embodiment of a K area according of the present invention,
Fig. 13A is a perspective view illustrating a cartridge of a battery module and a cooling cover of the same battery module according to another embodiment of the present invention, and
Fig 13B is a perspective view illustrating in a case where the cooling cover in Fig. 13A is bent.

### DETAILED DESCRIPTION OF THE EMBODIMENTS

Hereinafter, the present invention will be described in detail, according to claim 1, and with reference to the drawings. In the following, any aspect, example and embodiment which does not fall under the scope of the independent claims is not part of the invention.

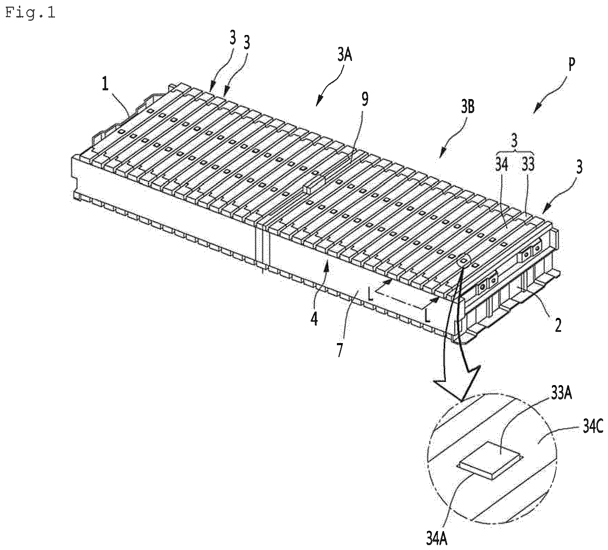

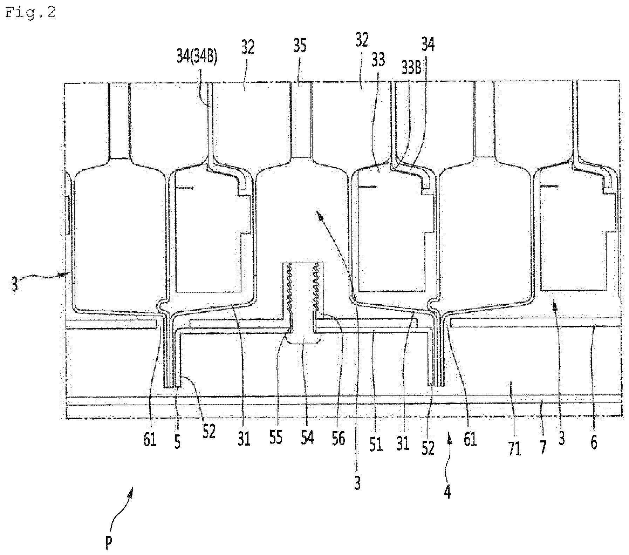

Fig. 1 is a perspective view illustrating a battery pack according to an embodiment of the present invention and Fig. 2 is a cross-sectional view illustrating the battery module and a connecting board assembly in Fig. 1.

The battery pack P may include a pair of end plates 1 and 2, and a plurality of battery modules 3 which are disposed between the pair of end plates 1 and 2.

The plurality of battery modules 3 may be disposed to be stacked between the pair of end plate 1 and 2. The plurality of battery modules 3 may be disposed to be stacked between the pair of end plate 1 and 2 in the horizontal direction and in the perpendicular direction to the each other.

The plurality of battery modules 3 may be divided into a number of groups 3A and 3B by a separator 9. The battery pack P may include a separator 9 which is divided into a group 3A and the other group 3B from a number of groups 3A and 3B.

The battery module 3 includes a battery cell 32 having a cell lead 31, as illustrated in Fig. 2. The cell lead 31 may be an positive pole cell lead or a negative pole cell lead which is provided in the battery cell 32.

The battery module 3 further includes a cartridge 33 and a cooling cover 34. The battery cell 32 is disposed between the cartridge 33 and the cooling cover 34.

The battery module 3 may include at least two battery cell 32. The battery module 3 may further include a buffering member 35 disposed between the two battery cells 32. The buffering member 35 may be made of an elastic material.

In a case where the battery module 3 includes a pair of battery cells 32, any one of the pair of battery cells 32 may be seated to be in contact with the cartridge 33 and the other one thereof may be seated to be in surface-contact with the cooling cover 34.

A projection 33A may be formed on the any one of the cartridge 33 and the cooling cover 34, and a projection coupling hole 34A in which the projection is inserted and coupled with each other may be formed on the other one thereof.

The cooling cover 34 includes a heat conductive plate 34B which faces the battery cell 32 and a fastening plate 34C which is bent from the heat conductive plate 34B and is **detachably** coupled with the cartridge 33.

The heat conductive plate 34B may include a flat plate portion which is in surface-contact with the battery cell 32.

A pair of fastening plates 34C is provided on the heat conductive plate 34B. In a case where a projection 33A may be provided on the fastening plate 34C, a projection coupling hole 34A in which the projection 33A is inserted and coupled with each other may be provided in the cartridge 33. Contrary, in a case where the projection coupling hole 34A may be provided in the fastening plate 34C, the projection 33A which is inserted into the projection coupling hole 34A and coupled with each other may be provided in the cartridge 33.

An opening portion 33B into which the cooling cover of the other neighboring battery module is inserted is provided on the cartridge 33, as illustrated in Fig. 2.

At the time of coupling the cartridge 33 and the cooling cover 34, the cooling cover 34 and any one of the pair of the battery cells 32, the buffering member 35 and the other one of the pair of the battery cells 32, and the cartridge 33 are coupled with each other and thus may become a battery module 3.

Meanwhile, at least a portion of the cell lead 31 of the battery cell 32 is positioned at the outside of the cartridge 33 and the cooling cover 34 and the cell lead 31 may be connected to a connecting board assembly 4.

The battery pack P may further include a connecting board assembly 4 to which a plurality of battery modules 3 are connected. The connecting board assembly 4 may be connected with the cell lead 31 and may connect with the plurality of battery cells 32 in series or in parallel.

The battery pack P may include a bus bar 5 to which the cell lead 31 is connected, and a connecting board 6 on which the bus bar 5 is mounted, as illustrated in Fig. 2. The battery pack P may further include an outer cover 7 which covers the connecting board 6 and the bus bar 5.

The bus bar 5 may include a fastening portion 51 and a cell lead connecting portion 52 which is provided on the fastening portion 51 and to which the cell lead(31) is connected.

The fastening portion 51 may be fastened to the connecting board 6 using a latching portion such as a hook or a fastening member(54) such as a screw (hereinafter, referred to as a fastening member). In a case where the fastening portion 51 is fastened to the connecting board 6 by the fastening member 54, a through hole 55 through which the fastening member 54 is passed may be provided on the fastening portion 51 and a fastening member fastening portion 56 to which the fastening member 54 is fastened may be disposed on the connecting board 6. The fastening member fastening portion 56 may include a fastening boss through which the fastening member 54 is screw-fastened or nut. If the fastening portion 51 is fastened via the latching portion, a hook is form at any one of the fastening portion 51 and the connecting board 6 and a hook latching portion which the hook is latched to. On the other hand, the fastening portion 51 and the connecting board 6 can be fastened by clamping the fastening portion 51 and the connecting board 6 with one or more ends by a clamp member.

A plurality of cell leads connecting portions 52 are provided to the fastening portion 51 and more than one pair of cell lead connecting portions 52 are provided thereto.

The bus bar 5 may be is It may be connected to be energized with a pair of cell leads 31. The pair of cell leads 31 is electrically connected through the bus bar 5. The pair of cell lead connecting portions 52 are provided to be face each other. The pair of cell lead connecting portions 52 are bent to be perpendicular to the fastening portion 51.

The bus bar 5 may be connected to be energized to the cell lead 31 of the other battery cell 32. The cell lead 31 of the any one battery cell 32 of the plurality of battery cells 32 may be connected with any one of the pair of cell lead connecting portion 52. The cell lead 31 of any the other battery cell 32 of the plurality of battery cells 32 may be connected with the other one of the pair of cell lead connecting portions 52.

Preferably, the cell lead 31 and the bus bar 5 is joined to be capable of transmitting the sufficient power while the cell lead 31 is may be firmly connected to the bus bar 5. Further, preferably the cell lead 31 is joined to the bus bar 5 in an ultrasonic welding or a vibration welding manner.

A plurality of bus bars 5 may be installed to the connecting board 6. A plurality of bus bars 5 may be disposed to be spaced apart in a parallel direction to a stacking direction of the battery module 3 and each other.

The connecting board 6 may be configured to be a plate shape body which is lengthened in the parallel direction to the stacking direction of the plurality of battery modules 3.

A through hole 61 through which the cell lead 31 of the battery cell 32 is passed is provided on the connecting board 6.

Meanwhile, a space 71 in which the bus bar 5 is housed is provided between the connecting board 6 and the outer cover 7. The bus bar 5 is housed in the space 71 between the connecting board 6 and the outer cover 7 in a state where the bus bar 5 is mounted on the connecting board 6.

At the time of assembly of the battery pack P, the bus bar 5 may be joined with the cell lead 31 of the battery cell 32 in a state where the bus bar 5 is fastened to the connecting board 6.

The outer cover 7 may be fastened to at least one of the end plates 1 and 2 illustrated in Fig. 1, the separator 9 and the connecting board 6.

The outer cover 7 is capable to protecting the bus bar 5 mounted on the connecting board 6. The outer cover 7 is capable to protecting the cell lead 31 positioning in the space 71.

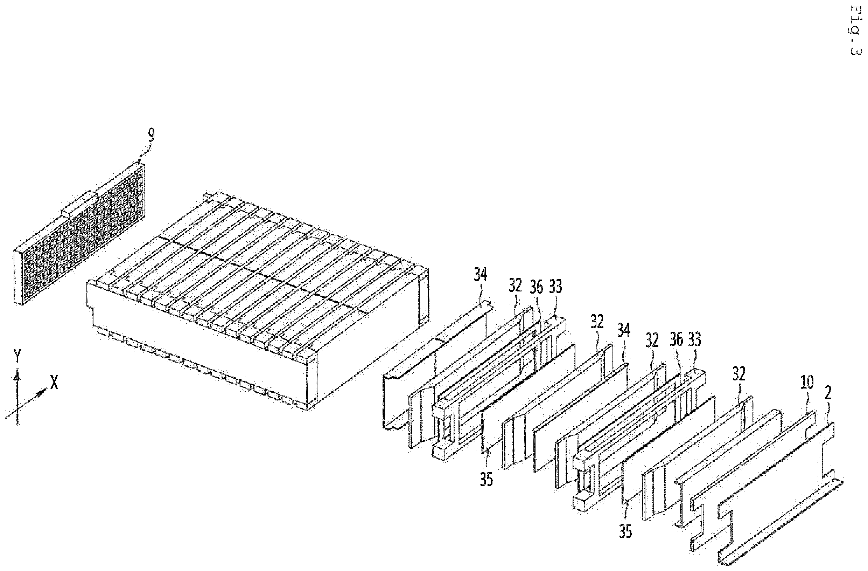

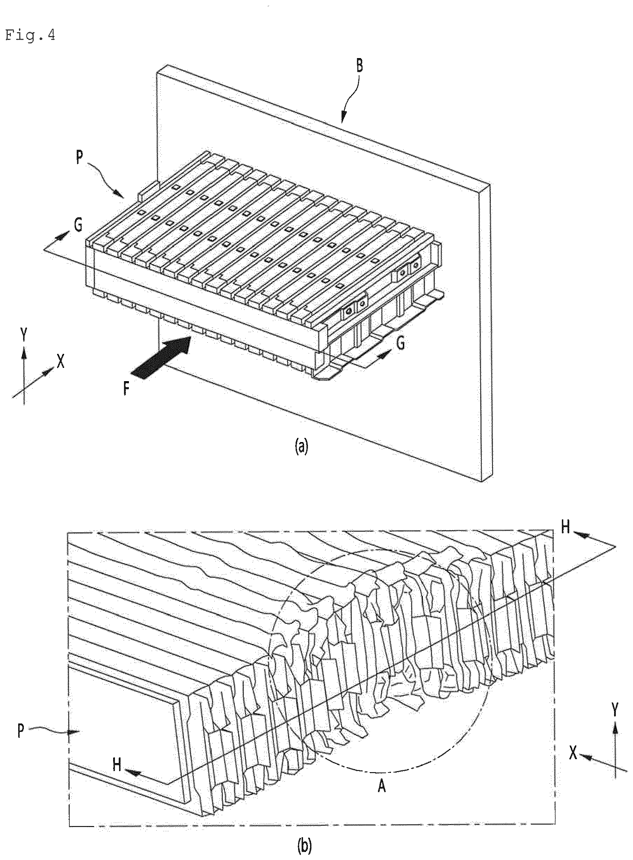

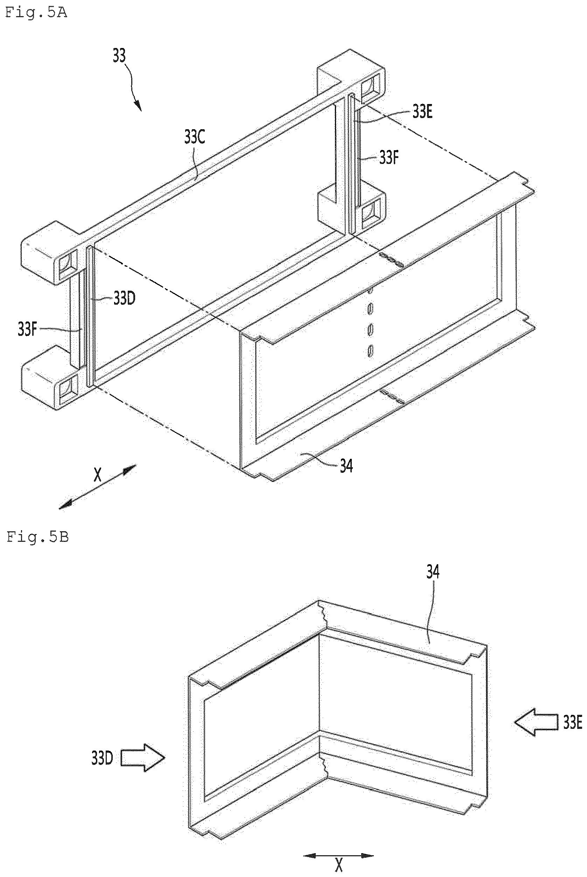

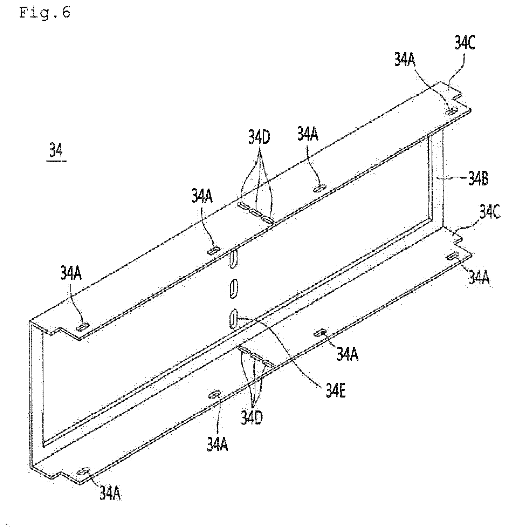

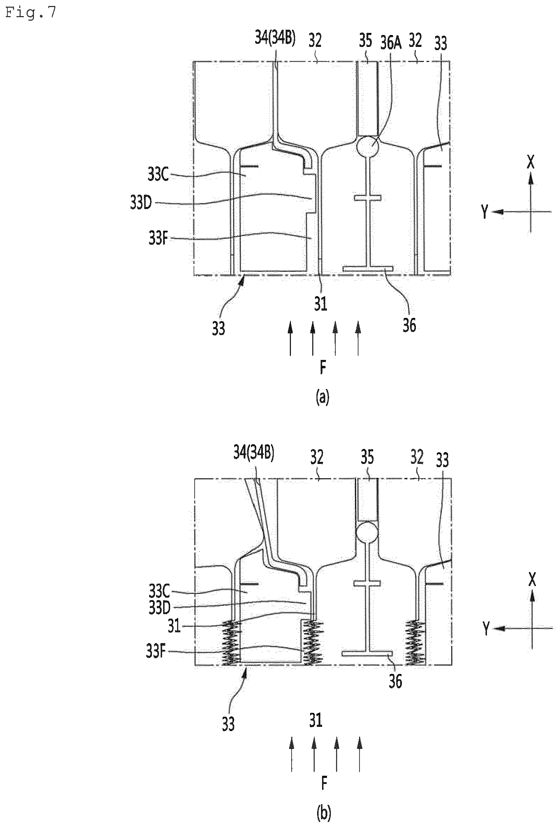

Fig. 3 is an exploded perspective view illustrating a battery pack according to the embodiment of the present invention, Fig. 4 is a perspective view illustrating in a case where an external impact is applied to the battery pack in Fig. 3, Fig. 5 is a perspective view illustrating the cartridge and the cooling cover in Fig. 4, Fig. 6 is a perspective view illustrating the cooling cover according to the embodiment of the present invention, and Fig. 7 is a cross-sectional view illustrating a cross section of the battery pack in Fig. 4. The present invention will be described with reference to the Fig. 3 to Fig. 7.

Fig. 3 illustrates a separator 9 and one of a number of battery module 3 groups divided by the separator 9 of components of the battery pack P illustrated in Fig. 1. The plurality of battery modules 3 constituting the group may position between the separator 9 and the end plates 1 and 2.

The battery pack P illustrated in the FIG. 3 may position in an order of the separator 9, the plurality of battery modules 3, the insulating seat 10 and the end plates 1 and 2 along stacking direction of the plurality of battery modules 3.

The battery module 3 may further include a secondary cartridge 36. Each of the battery module 3 may position in an order of the cooling cover 34, the secondary cartridge 36 and the cartridge 33. The battery cell 32 and the buffering member 34 may position in an order of the battery cell 32, the buffering member 34 and the battery cell 32 between the cooling cover 34 and the cartridge 33 of the each battery module as illustrated in fig 2. The number of the battery cell 32 or the buffering member 35 which are included in the each battery module 3 may be changed, if necessary.

A method of stacking the battery module 3 is that the battery module 3 coupled with the separator 9 and the heat conductive plate 34B of the battery module 3 is disposed to face the separator 9.

The heat conductive plate 34B of the other battery module 3 which is coupled to the neighboring battery modules 3 may couple in order to be in contact with the cartridge 33 of the battery module 3. The heat conductive plate 34B of the other battery module 3 which is coupled to the neighboring battery modules 3 may couple in order to be in contact with the cartridge 33 of the other battery module 3.

The plurality of battery modules 3 may be stacked in a manner of coupling of the battery module 3, the other battery module, and another battery module 3.

Fig. 4A is a view illustrating in a state where the battery pack P is received impact from the outside. The battery pack P may be mounted on the entire structure as a portion of the entire structure. B is capable of performing role of fixing the battery pack P as a fixed rigid block. At this time, when the outer force F is applied from the outside, the fixed battery pack P receives the impact and thus its shape may be deformed.

Fig. 4B is a view illustrating a shape deformation after the battery pack P is received the impact in the Fig. 4A. An area is area that the shape deformation is occurred by the outer impact.

When the shape of the battery pack P is deformed by the impact, the positive pole cell lead 31 and the negative pole cell lead 31 of one battery cell 32 included in the battery pack P may be in contact with the cooling cover 34 respectively. The cooling cover 34 is made of metal for heat conduction. In other words, when the positive pole cell lead 31 and the negative pole cell lead 31 of the battery cell 32 are in contact with the cooling cover 34, the battery cell 32 and the cooling cover 34 constitutes a closed circuit and thus may be short-circuited. When the battery cell 32 and the cooling cover 34 is short-circuited, a fire may be occurred in the battery pack P.

Accordingly, in a case where the battery pack P receives an impact from the outside, a structure which prevents the cell lead 31 and the cooling cover 34 of the battery cell 32 from being contacted is needed.

The present invention proposes a structure that in a case where the battery pack P receives an impact from the outside, the cooling cover 34 is bent, and thus a distance between and the cooling cover 34 and cell lead 31 of the battery cell 32 is increased. According to the structure described above of the present invention, the distance of the cooling cover 34 and the cell lead 31 of the battery cell 32 is increased and thus the short-circuit of the cell lead 31 and the cooling cover 34 may be prevented.

Fig. 5 is a view illustrating the cartridge 33 of the battery modules 3 and the cooling cover 34 of the neighboring battery modules 3 stacked to the battery module 3 of the battery module 3 constituting the battery pack P in Fig. 3.

The present invention proposes a cartridge 33 which includes means for being bent the cooling cover 34 in a case of the battery pack P receives an impact from the outside. In a case where the battery pack P receives an impact from the outside, the cooling cover 34 is bent by the cartridge 33, and thus a distance between the cooling cover 34 and cell lead(51)of the battery cell 32 may be increased.

The cartridge 33 according to the embodiment of the present invention does not include the means for bending the cooling cover 34 of the battery module 3 included the cartridge 3 but may include the means for being bent the cooling cover 34 of the other neighboring battery module 3.

Fig. 5A is an exploded perspective view illustrating the coupling state between the cartridge 33 of the battery module 3 and the cooling cover 34 of the other battery module (3) which is adjacent to the battery stack module (3) with each other.

Fig 5B is a view illustrating in a case where the cooling cover 34 of the other battery module 3 is received pressure from the cartridge 33 of the battery module 3 and thus is bent.

The cartridge 33 of the battery module 3 may include a seating portion 33C in which the battery cell 32 is seated. A pressing portion 33D is provided on one surface of the seating portion 33C. A supporting portion 33E is provided on one surface of the seating portion 33C.

The pressing portion 33D and the supporting portion 33E may be provided on a same surface of the seating portion 33C.

The battery cell 32 may be seated to be contacted on one surface of the seated portion 33C.

The pressing portion 33D and the supporting portion 33E is provided to be spaced apart from each other with a constant distance. The pressing portion 33D and the supporting portion 33E is projected to faced each other.

The pressing portion 33D may include a plurality of projecting portions which are formed on the seating portion 33C.

The supporting portion 33E may include a plurality of projecting portions which are formed on the seating portion 33C.

The direction in which the pressing portion 33D is projected may be a direction toward which the cartridge 33 is directed the battery module 3 included and the other neighboring battery modules 3.

The direction in which the supporting portion 33E is projected may be a direction toward which the cartridge 33 is directed the battery module 3 included and the other neighboring battery modules 3.

The pressing portion 33D is formed to be lengthened in the perpendicular direction to the longitudinal direction of the cartridge 33.

The supporting portion 33E is formed to be lengthened in the perpendicular direction to the longitudinal direction of the cartridge 33.

The pressing portion 33D may have a rib shape. The pressing portion 33D may have a plurality of rib shapes.

The supporting portion 33E may be a rib shape. The supporting portion 33E may have a plurality of rib shapes.

The pressing portion 33D and the supporting portion 33E may have the same shape with each other.

The pressing portion 33D of the battery module 3 may be in contact with one end of the cooling cover 34 which is included in the other neighboring battery module 33 of the battery module 3.

The supporting portion 33E of the battery module 3 may be in contact with the other end of the cooling cover 34 which is included in the other neighboring battery module 33 of the battery module 3.

The height that the pressing portion 33D of the battery module 3 is projected from the cartridge 33 is equal to the thickness of a heat conductive plate 34B and is greater than the thickness of the heat conductive plate 34B.

The height that the supporting portion 33E of the battery module 3 is projected from the cartridge 33 is equal to the thickness of a heat conductive plate 34B and is greater than the thickness of a heat conductive plate 34B.

The cooling cover 34 of the other neighboring battery module 3 of the battery module 3 is positioned between the pressing portion 33D and the supporting portion 33E of the battery module 3.

The gap that pressing portion 33D and the supporting portion 33E of the battery module 3 is spaced apart from each other may be only a length of the heat conductive plate 34B of the cooling cover 34 included in the other neighboring battery modules 3 of the battery module 3.

The cooling cover 34 of the other neighboring battery modules 3 of the battery module 3 is restricted in the longitudinal direction of the cooling cover 34 due to the pressing portion 33D of the battery module 3.

The cooling cover 34 of the battery module 3 and the other neighboring battery modules 3 is restricted in the longitudinal direction of the cooling cover 34 due to the supporting portion 33E of the battery module 3.

In a case where an impact is applied to the battery pack P from the outside, the pressing portion 33D of the battery module 3 may press one end or one side of the cooling cover 34 of the other neighboring battery module 3 of the battery module 3. The cooling cover 34 of the other battery module 3 receives pressure from the pressing portion 33D and the battery module 3 and may bend as illustrated in Fig. 5B.

In a case where an impact is applied to the battery pack P from the outside, the pressing portion 33D of the battery module 3 may press one end or one side of the cooling cover 34 of the other neighboring battery module 3 of the battery module 3. The supporting portion 33E of the battery module 3 may support the other end or the other side of the cooling cover 34 of the other neighboring battery module 33 of the battery module 3.

The one end of the cooling cover 34 may is one end of the heat conductive plate 34B. The other end of the cooling cover 34 may is the other end of the heat conductive plate 34B.

The one side of the cooling cover 34 is one side of the heat conductive plate 34B. The other side of the cooling cover 34 is the other side of the heat conductive plate 34B.

The one end of the cooling cover 34 may be perpendicular to the longitudinal direction of the cooling cover 34. The other end of the cooling cover 34 may be perpendicular to the longitudinal direction of the cooling cover 34.

The one end or the one side of the heat conductive plate 34B of the cooling cover 34 may be perpendicular to the longitudinal direction of the cooling cover 34. The other end or the other side of the heat conductive plate 34B of the cooling cover 34 is perpendicular to the longitudinal direction of the cooling cover 34.

The cooling cover 34 of the other battery module 3 receives pressure from the pressing portion 33D of battery module 3 and may be supported from the supporting portion 33E, and the pressure in the transverse direction may act to the cooling cover 34. The cooling cover 34 received the pressure in the transverse direction may be bent as illustrated in Fig. 5B.

In a case where the cooling cover 34 is bent as illustrated in the Fig. 5B, the gap between the one end and the other end of the cooling cover 34 may be decreased than that of before the cooling cover 34 is bent.

In a case where the cooling cover 34 is bent as illustrated in the Fig. 5B, the gap between the one side and the other side of the cooling cover 34 may be decreased than that of before the cooling cover 34 is bent.

In a case where the cooling cover 34 is bent as illustrated in the Fig. 5B, the gap between the one end and the other end of the cooling cover 34 may be decreased than the length of the battery cell 32.

In a case where the cooling cover 34 is bent as illustrated in the Fig. 5B, the gap between the one side and the other side of the cooling cover 34 may be more decreased than the length of the battery cell 32.

In a case where the cooling cover 34 is bent as illustrated in the Fig. 5B, a bending line perpendicular to the longitudinal direction of the cooling cover 34 may be formed in the heat conductive plate 34B of the cooling cover 34.

In a case where the cooling cover 34 is bent as illustrated in the Fig. 5B, a bending line perpendicular to the longitudinal direction of the cooling cover 34 may be formed in the fastening plate 34C of the cooling cover 34.

With reference to Fig. 6, the cooling cover 34 according to the embodiment of the present invention further includes a hole except for the coupling groove 34A of the projection 36A for coupling with the cartridge 33.

In a case where the battery pack P receives an impact, the cooling cover 34 includes the hole and thus is more easily bent.

The hole has a long hole shape. The cooling cover 34 includes a plurality of holes.

The heat conductive plate 34B includes a hole 34E. The hole 34E which is formed on the heat conductive plate 34B is formed to be lengthened and thus may have a long hole shape.

The hole 34E formed on the heat conductive plate 34B is a long hole shape and is positioned to be perpendicular to the longitudinal direction of the heat conductive plate 34B. The hole 34E formed on the heat conductive plate 34B is a long hole shape and is positioned to be perpendicular to the longitudinal direction of the cartridge 33.

The following paragraph, not forming part of the invention, wherein the hole 34E formed on the heat conductive plate 34B may be lengthened to be vertical to the longitudinal direction of the cooling cover 34. The hole 34E formed on the heat conductive plate 34B may be lengthened to be vertical to the longitudinal direction of the heat conductive plate 34B.

The heat conductive plate 34B includes a plurality of holes 34E. In a case where the heat conductive plate 34B includes a plurality of holes 34E, the plurality of holes 34E may position in a state of forming a row. The plurality of holes 34E are spaced apart in the perpendicular direction to the longitudinal direction of the heat conductive plate 34B. The plurality of the holes 34E are spaced apart in the perpendicular direction to the longitudinal direction of the heat conductive plate 34B. The heat conductive plate 34B may be symmetrical with respect to a row formed by a plurality of holes 34E.

The heat conductive plate 34B may be symmetrical with respect to a row formed by a plurality of holes 34E. The cooling cover 34 may be symmetrical with respect to a row formed by a plurality of holes 34E.

The cooling cover 34 includes the pair of the fastening plates 34C. A hole 34D is formed on any fastening plate 34C of the pair of fastening plates 34C. The hole 34D formed on the pair of fastening plates 34C may be symmetrical with each other.

The hole 34D which is formed on the fastening plate 34C is formed to be lengthened and thus has a long hole shape.

The hole 34D formed on the fastening plate 34C is a long hole shape and is positioned to be perpendicular to the longitudinal direction of the fastening plate 34C. The hole 34D formed on the fastening plate 34C is a long hole shape and is positioned to be perpendicular to the longitudinal direction of the cartridge 33.

The following paragraph, not forming part of the invention, wherein the hole 34D formed on the fastening plate 34C may be lengthened to be vertical to the longitudinal direction of the cooling cover 34. The hole 34D formed on the fastening plate 34C may be lengthened to be vertical to the longitudinal direction of the fastening plate 34C.

The fastening plate 34C includes a plurality of holes 34D. In a case where the fastening plate 34C includes a plurality of holes 34D, the plurality of holes 34D may be positioned in a state of forming a row. The plurality of holes 34D may be spaced apart in the perpendicular direction to the longitudinal direction of the fastening plate 34C. The plurality of holes 34D are spaced apart in the perpendicular direction to the longitudinal direction of the cooling cover 34. The fastening plate 34C may be symmetrical with respect to a row formed by a plurality of holes 34D.

Fig. 7 is a cross-sectional view illustrating a cross section of the battery pack P in Fig. 4. Fig. 7A is a cross-sectional view of the G-G line and illustrates a state before the battery pack P receives the impact. Fig. 7B is a cross-sectional view of the H-H line and illustrates a state after the battery pack P receives the impact.

When the external force is applied to the battery pack P in the X direction, the shape deformation as illustrated in Fig. 7B may occur in the battery pack P.

When the external force is applied to the battery pack P in the X direction, the pressing portion 33D of the cartridge 33 presses one end or one side of the cooling cover 34 in the X direction. At this time, the support portion 33E of the cartridge 33 may support one end or one side of the cooling cover 34 in the opposite dirction of the X direction.

When the external force is applied to the battery pack P in the X direction, the cooling cover 34 may be bent as illustrated in Fig. 7B due to the pressing portion 33D of the cartridge 33.

When the external force is applied to the battery pack P in the X direction, the cooling cover 34 may be bent as illustrated in Fig. 7B due to the pressing portion 33D and the supporting portion 33E of the cartridge 33.

When the cooling cover 34 is bent as illustrated in Fig. 7B, the cooling cover 34 and the cell lead 31 is not in contact with each other to be space apart from each other. In other words, even if the battery pack P receives an impact from the outside, the cooling cover 34 and cell lead 31 is not short-circuited and thus the danger of overheat or fire may be reduced.

When the external force is applied to the battery pack P in the X direction, the cell lead 31 of the battery cell 32 receives the pressure in the X direction. When the cell lead 31 receives the pressure in the X direction, the cell lead 31 may be crumpled as illustrated in Fig. 7B.

As illustrated in Fig. 7B, the cell lead 31 receives the external force and thus may be crumpled. When the crumpled cell lead 31 does not have a sufficient space to escape, the cell lead 31 may be lost. In a case where the cell lead 31 is lost, the length of the cell lead 31 may be decreased and there is a danger that the cooling cover 34 and the battery is short-circuited.

Accordingly, the present invention proposes the space in which the crumpled cell lead 31 is to be escaped so that the cell lead 31 is not lost due to the external force. Therefore, the cartridge 33 according to the embodiment of the present invention may include a stepped portion 33F.

The stepped portion 33F may provide the space in which the crumpled cell lead 31 escapes in a case where an external force is applied to the battery pack P.

Accordingly, the cell lead 31 may move in the stacking direction of the battery cell 32 due to the space in which the stepped portion 33F provides. The cell lead 31 may move in the perpendicular direction to the stacking direction of the battery cell 32 due to the space in which the stepped portion 33F is provided.

Alternatively, the cell lead 31 may move in the stacking direction of the battery module 3 due to the space in which the stepped portion 33F may be provided. The cell lead 31 may move in the perpendicular direction to the stacking direction of the battery module 3 due to the space in which the stepped portion 33F provided.

The cartridge 33 of the battery module 3 includes a seating portion 33C in which the battery cell 32 is seated. A stepped portion 33F is provided on one surface of the seating portion 33C.

The battery cell 32 may be seated to be contacted on the one surface of the seating portion 33C. The stepped portion 33F and the pressing portion 33D may be formed on a same surface of the seating portion 33C.

The stepped portion 33F may be formed in parallel with the pressing portion 33D.

The stepped portion 33F may be formed in parallel with the supporting portion 33E.

The stepped portion 33F may be formed to face at least a portion of the cell lead 31.

The stepped portion 33F included in the cartridge 33 of the battery module 3 may be formed to be parallel with the cooling cover 34 of the other neighboring battery module 33 to the battery module 3.

The stepped portion 33F included in the cartridge 33 of the battery module 3 may be formed to be parallel with the heat conductive plate 34B of the other neighboring battery module 33 of the battery module 3.

The step of the stepped portion 33F is formed to be smaller than the thickness of the cartridge 33.

The step of the stepped portion 33F is formed to be smaller than the thickness of the seating portion 33C of the cartridge 33.

The stepped portion 33F may be formed on the same surface with one surface of the seating portion 33C on which the pressing portion 33D is formed. The stepped portion 33F may be formed in the outer side of the pressing portion 33D.

The stepped portion 33F may be formed on the same surface with one surface of the seating portion 33C on which the supporting portion 33E is formed. The stepped portion 33F may be formed in the outside of the supporting portion 33E.

The stepped portion 33F is formed to be lengthened in the perpendicular direction to the longitudinal direction of the cartridge 33.

The width of the stepped portion 33F may be equal to the width of the cell lead 31.

The width of the stepped portion 33F may be greater than the width of the cell lead 31.

The gap between the stepped portion 33F formed on the outside of the pressing portion 33D and the stepped portion 33F formed on the outside of the supporting portion 33E may be greater than the gap between the pressing portion 33D and the supporting portion 33E.

The gap between the stepped portion 33F formed on the outside of the pressing portion 33D and the stepped portion 33F formed on the outside of the supporting portion 33E may be greater than the length of the cooling cover 34.

The battery module 3 may further include a secondary cartridge 36. Each of the battery module 3 may position in an order of the cooling cover 34, the secondary cartridge 36 and the cartridge 33. The battery cell 32 and the buffering member 34 may position in an order of the battery cell 32, the buffering member 34 and the battery cell 32 between the cooling cover 34 and the cartridge 33 of the each battery module 3.

The secondary cartridge 36 may position in parallel with the cartridge 33.

The secondary cartridge 36 may position in parallel with the cooling cover 34.

The secondary cartridge 36 may position toward one end or one side of the buffering member 35 positioned between the battery cell 32 and the battery cell 32, as illustrated in Fig. 7A.

The secondary cartridge 36 may further include a projection 36A toward one end or one side of the buffering member 35 positioned between the battery cell 32 and the battery cell 32, as illustrated in Fig. 7A.

When the buffering member 35 is not provided between the battery cell 32 and the battery cell 32, the battery cell 32 and the battery cell 32 may surface-contact. In this case, the secondary cartridge 36 may position toward the contact surface between the battery cell 32 and the battery cell 32. Alternatively, the secondary cartridge 36 may further include a projection 36A toward the contact portion between the battery cell 32 and the battery cell 32.

When the external force is applied to the battery pack P in the X direction, the shape deformation as illustrated in Fig. 7B may occur in the battery pack P.

When the external force is applied to the battery pack P in the X direction, the pressing portion 33D of the cartridge 33 presses one end or one side of the cooling cover 34 in the X direction. At this time, the secondary cartridge 36 may enter toward the buffering member 35. When the secondary cartridge 36 may enter toward the buffering member 35, the projection 36A of the secondary cartridge 36 may position between the battery cell 32 and the battery cell 32 as illustrated in the FIG. 7B.

The buffering member 35 is not provided between the battery cell 32 and the battery cell 32 and the battery cell 32 and the battery cell 32 may surface-contact. At this time, when an external force is applied to the battery pack P in the X direction, the secondary cartridge 36 may enter toward the contact surface between the battery cell 32 and the battery cell 32. At this time, When the secondary cartridge 36 may enter toward the contact surface between the battery cell 32 and the battery cell 32, the projection 36A of the secondary cartridge 36 may position between the battery cell 32 and the battery cell 32.

The projection 36A of the secondary cartridge 36 may position between the battery cell 32 and the battery cell 32. When an external force is applied to the battery pack P in the X direction, the projection 36A of the secondary cartridge 36 may press the battery cell 32 contacting the projection 36A.

With reference to Fig. 7B, the projection 36A of the secondary cartridge 36 may press the two battery cell 32 contacting the projection 36A in the mutually opposite directions according to Y direction. The secondary cartridge 36 may press the two battery cell 32 according to the Y direction and thus the cooling cover 34 and the cartridge 33 may contact without misaligning to each other, even if the external force is applied to the battery pack P. Accordingly, the cooling cover 34 may be more easily bent by the secondary cartridge 36.

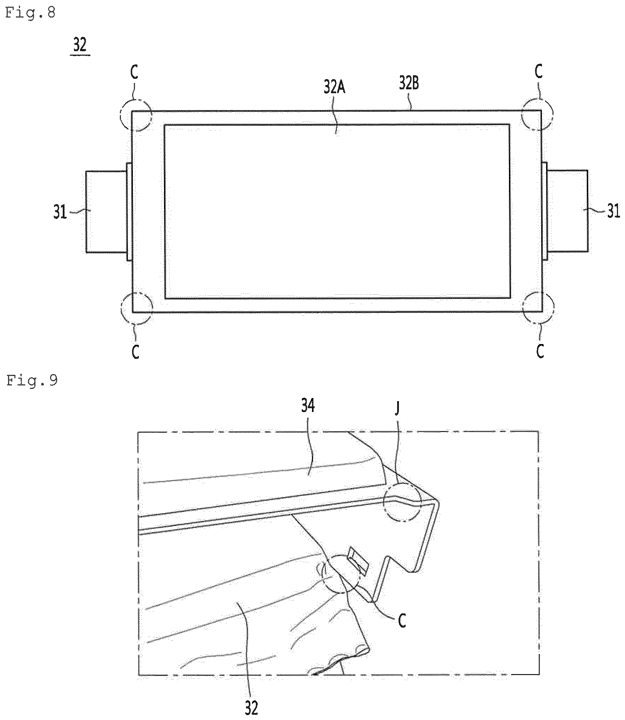

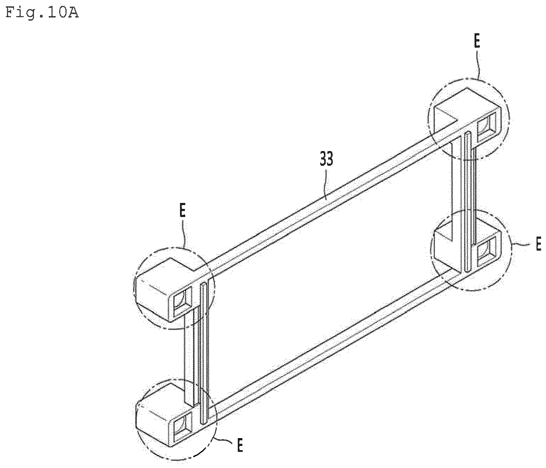

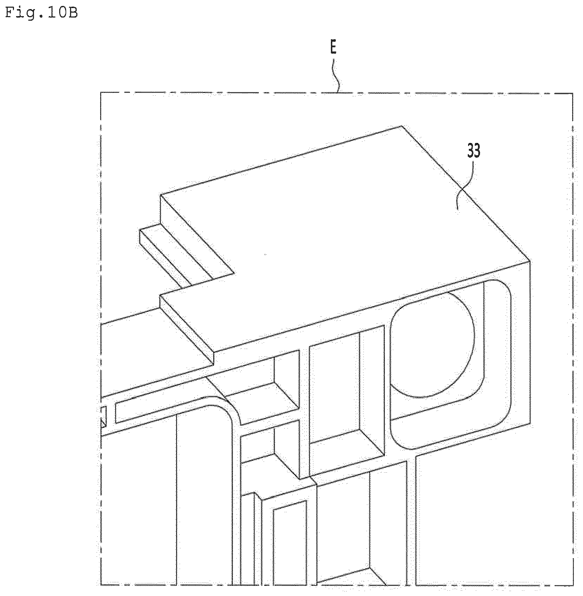

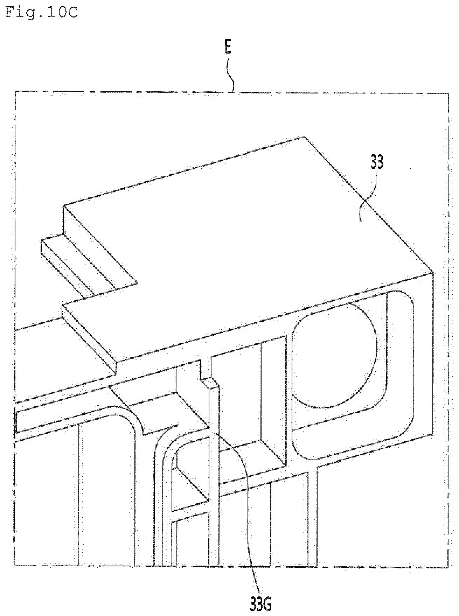

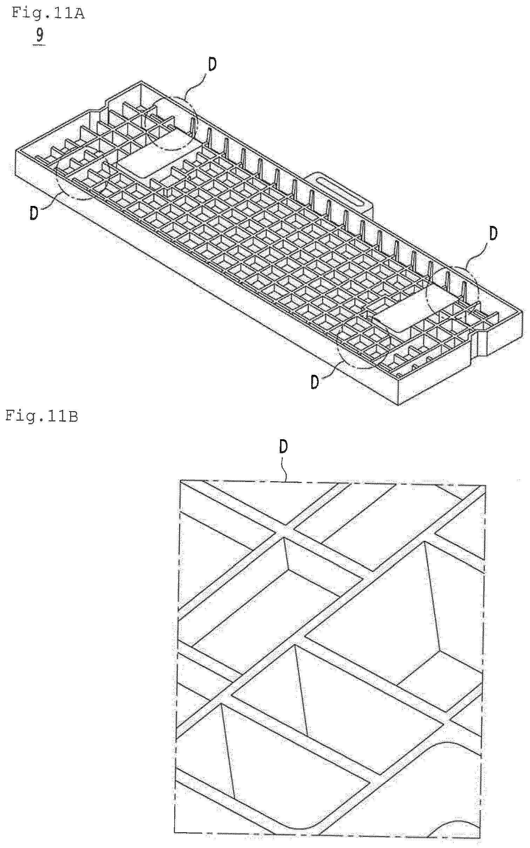

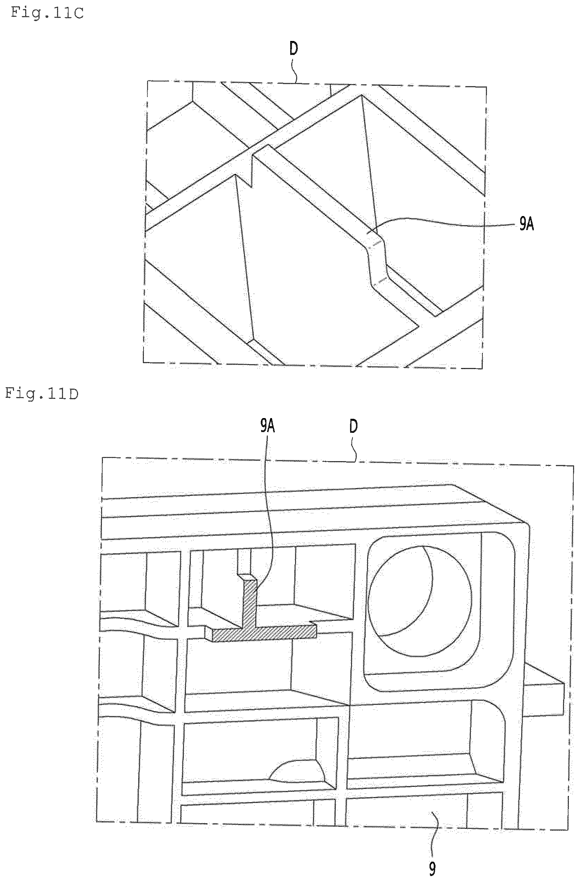

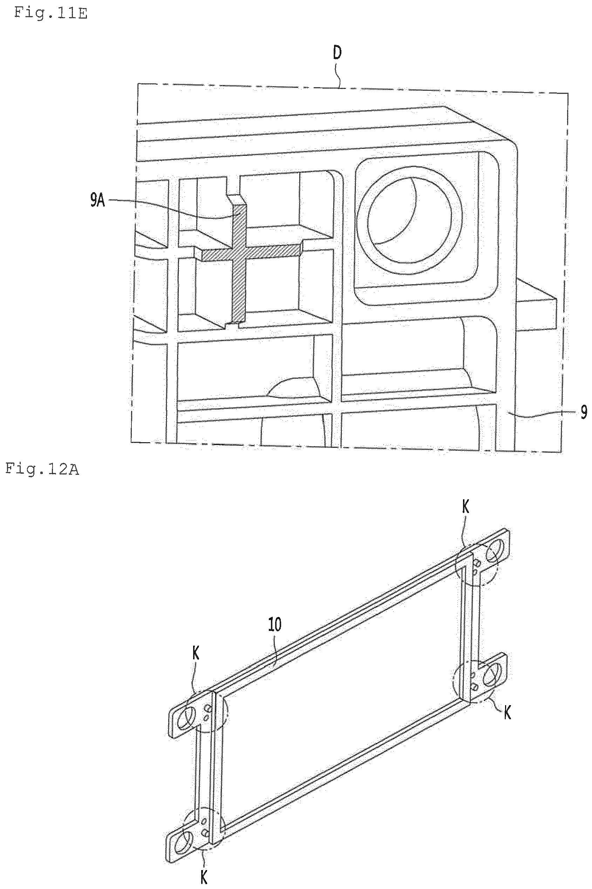

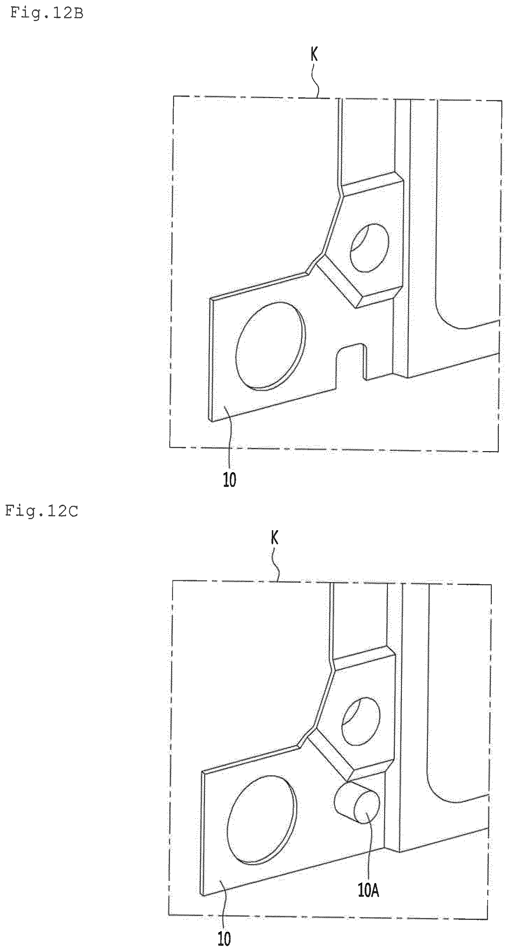

Fig. 8 is a front view illustrating a battery cell according to an embodiment of the present invention, Fig. 9 is an enlarged view illustrating the cooling cover and the battery cell contacting the cooling cover, Fig. 10 is a perspective view illustrating a cartridge according to an embodiment of the present invention, Fig. 11 is a perspective view illustrating a separator according to an embodiment of the present invention, and Fig. 12 is a perspective view illustrating an insulating sheet according to an embodiment of the present invention.

The battery cell 32 may include a battery cell main body 32A in which a charge is stored, a cell lead 31 which is connected to the battery cell main body 32A, and an exterior material 32B. The exterior material 32B performs a role that insulates the battery cell main body 32A. The exterior material 32B may surround the battery cell main body 32A and may surround at least a portion of the cell lead 31.

With reference to the Fig. 8, a C area in which the exterior material 32B overlaps with the edge of the battery cell 32 may be formed. In a case where the battery cell 32 has a rectangular shape, the C area may be formed on the four portions. The C area may be a corner portion or an edge portion of an outer appearance of the battery cell 32.

The cooling cover 34 may generate a sharp corner due to the production process. With reference to Fig. 9, the sharp corner may be a J area. The cooling cover 34 and the battery cell 32 may be in surface-contact with each other. Further, the battery pack P may be mounted on the entire structure as a portion of the entire structure, and thus the battery pact P receives vibration and impact. At this time, the C area of the battery cell 32 which is in surface-contact with the cooling cover 34 makes friction with the J area of the cooling cover 34. Alternatively, the C area of the battery cell 32 which is in surface-contact with the cooling cover 34 makes repeatedly friction and separation with the J area of the cooling cover 34.

Thus, the C region of the battery cell 32 may be damaged or torn. When C region of the battery cell 32 is damaged or torn, the battery cell main body 32A is not insulated. In this case, the insulation of the battery cell 32, the battery module 3 or the battery pack P may be destroyed. Accordingly, a structure which allows the C area of the battery cell 32 and the J area of the cooling cover 34 to be appropriately separated or spaced apart from each other is needed.

Fig. 10A is a perspective view illustrating a cartridge 33 according to an embodiment of the present invention, The cartridge 33 of the battery module 3 may include a seating portion 33C in which the battery cell 32 is seated. A projection portion 33G may be provided in one surface of the seating portion 33C.

The projection portion 33G may be formed on one surface of the seating portion 33C on which the pressing portion 33D is formed. The projection portion 33G may be formed on one surface of the seating portion 33C on which the supporting portion 33E is formed.

The battery cell 32 may be seated to be contacted on the one surface of the seated portion 33C. The projection portion 33G may be formed on the other surface of the seated portion 33C.

With reference to the FIG. 10A, an E area may be formed on the edge of the cartridge 33 or the seating portion 33C. In a case where the seating portion 33C or cartridge 33 has a square shape, the E area may be formed on the four portions. The E area may be the edge portion or the corner portion of a seating portion 33C or the cartridge 33. The projection portion 33G may be formed on the E area. A plurality of projection portions 33G may be formed.

The projection portion 33G formed on the E area of the seating portion 33C or the cartridge 33 allows the C area of the battery cell 32 which is in surface-contact with the cooling cover 34 of the other neighboring battery module 3 to be bent or folded.

When the C area of the battery cell 32 which is in surface-contact with the cooling cover 34 is bent or fold, the C area may be separated or spaced apart from the J area of the cooling cover 34 and thus the risk that the outer appearance of the battery cell 32 is damaged may be reduced.

The projection portion 33G may be formed as Fig. 10C. The cartridge 33 of the related art is carried out in a state where the projection portion 33G is not formed, as illustrated in Fig. 10B. However, the cartridge 33 according to the embodiment of the present invention may form the projection portion 33G as illustrated in Fig. 10C. The projection portion 33G may have a rib shape.

Fig. 11A is a perspective view illustrating a separator 9 according to an embodiment of the present invention. The separator 9 may be in surface-contact with the cooling cover 34. The separator 9 may be in surface-contact with the a pair of cooling covers 34 with the separator 9 being disposed between the cooling covers 34.

The separator 9 may be in surface-contact with the heat conductive plate 34B of the cooling cover 34. The separator 9 may be in surface-contact with the a pair of heat conductive plates 34B with the separator 9 being disposed between the heat conductive plates 34B.

The projection portion 9A may be formed on one surface of the separator 9. Further, the projection portion 9A may be formed on the other surface of the separator 9.

A D area may be formed on the edge of the separator 9, with reference to Fig. 11. In a case where the separator 9 has a square shape, the D area may be formed on the four portions. The D area may be a corner portion or an edge portion of the separator 9. The projection portion 9A may be formed on the D area. A plurality of projection portions 9A may be formed. Further, the projection portion 9A may be formed on the opposite surface of the D area.

The projection portion 9A formed on the D area of the separator 9 allows the C area of the battery cell 32 which is in surface-contact with the cooling cover 34 of the neighboring battery module 3 of the separator 9 to be bent or folded.

When the C area of the battery cell 32 which is in surface-contact with the cooling cover 34 is bent or fold, the C area may be separated or spaced apart from the J area of the cooling cover 34 and thus the risk that the outer appearance of the battery cell 32 is damaged may be reduced.

The projection portion 9A may be formed as Fig. 11A to Fig. 11E. The separator 9 of the related art is carried out in a state where the projection portion 9A is not formed, as illustrated in Fig. 11B. However, the separator 9 according to the embodiment of the present invention may be formed the projection portion 9A which is parallel in the longitudinal direction of the separator 9 as illustrated in Fig. 11C. The projection portion 9A may have a rib shape.

Further, the cartridge 9 according to the embodiment of the present invention may be formed the projection portion 9A which is parallel in the longitudinal direction of the separator 9 and the projection portion 9A which is perpendicular to the longitudinal direction of the separator 9 as illustrated in Fig. 11d. The projection portion 9A may have a rib shape.

Further, the cartridge 9 according to the embodiment of the present invention may be formed the projection portion 9A which is parallel in the longitudinal direction of the separator 9 and the projection portion 9A which is perpendicular to the longitudinal direction of the separator 9 as illustrated in Fig. 11e. Further, the projection portion 9A parallel with the longitudinal direction of the separator 9 and the projection portion 9A perpendicular to the longitudinal direction of the separator 9 may cross to each other. The projection portion 9A may have a rib shape.

Fig. 12A is a perspective view illustrating an insulating sheet 10 according to an embodiment of the present invention. The insulation sheet 10 may position between the end plates 1 and 2 and the neighboring battery module 3 of the end plates 1 and 2. Further, the insulation sheet 10 may position between the end plates 1 and 2 and the cooling cover 34 of the neighboring battery module 3 of the end plates 1 and 2. The insulation sheet 10 may be in surface-contact with the cooling cover 34. Further, the insulation sheet 10 may be in surface-contact with the heat conductive plate 34B of the cooling cover 34.

The projection portion 10A may be formed on one surface of the insulation sheet 10.

A K area may be formed on the edge of the insulation sheet 10, with reference to Fig. 12a. In a case where the insulation sheet 10 has a square shape, the K area may be formed on the four portions. The K area may be a corner portion or an edge portion of the insulation sheet 10. The projection portion 9A may be formed on the K area. A plurality of projection portions 10A may be formed.

The projection portion 10A formed on the K area of the insulation sheet 10 allows the C area of the battery cell 32 which is in surface-contact with the cooling cover 34 of the neighboring battery module 3 of insulation sheet 10 to be bent or folded.

When the C area of the battery cell 32 which is in surface-contact with the cooling cover 34 is bent or fold, the C area may be separated or spaced apart from the J area of the cooling cover 34 and thus the risk that the outer appearance of the battery cell 32 is damaged may be reduced.

The projection portion 10A may be formed as Fig. 12C. The insulation sheet 10 of the related art is carried out in a state where the projection portion 10A is not formed, as illustrated in Fig. 12B. However, the insulation sheet 10 according to the embodiment of the present invention may form the projection portion 10A as illustrated in Fig. 12c. The projection portion 10A may have a rib shape. In addition, the projection portion 10A formed on one surface of the insulation sheet 10 may be projected in a convex shape and the other surface of the insulation sheet 10 is recessed in a concave shape.

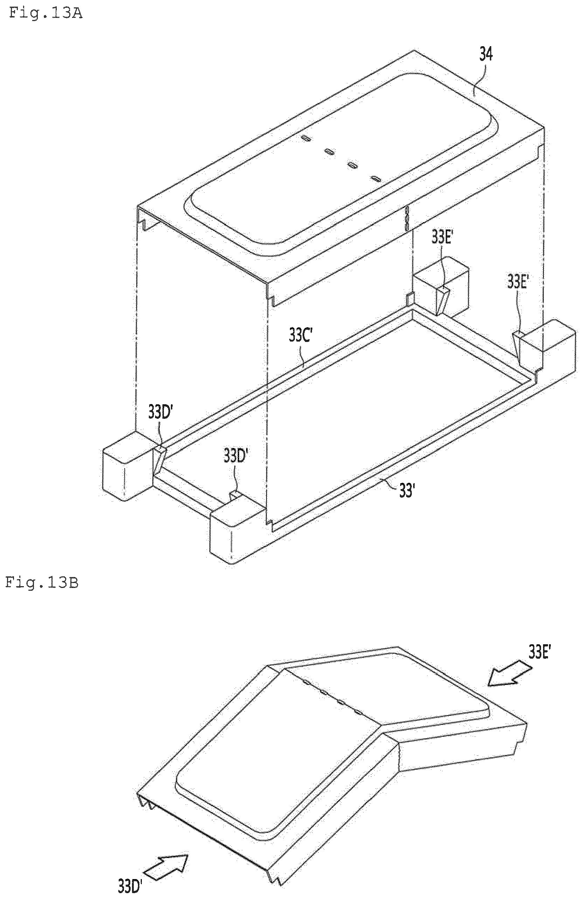

Fig. 13A is an exploded perspective view illustrating a cartridge of a battery module and a cooling cover coupled with cartridge of the battery module according to another embodiment of the present invention.

Fig 13B is a view illustrating in a case where the cooling cover 34' of the other battery module 3' according to the other embodiment of the present invention receives pressure from the cartridge 33' of the battery module 3' and thus is bent.

The cartridge 33' according to the other embodiment of the present invention includes the means for bending the cooling cover 34' of the battery module 3' including the cartridge 33 but does not include the means for bending the cooling cover 34' of the neighboring battery module 3'.

Hereinafter, a different construction and effect from the embodiment described above will be described and the construction which is same or similar to the embodiment described above omits in order to avoid duplicate description.

The cartridge 33' of the battery module 3' may include a seating portion 33C' in which the battery cell 32' is seated. A pressing portion 33D' is provided in one surface of the seating portion 33C'. A supporting portion 33E' may be provided in one surface of the seating portion 33C'.

The pressing portion 33D' and the supporting portion 33E' may be provided in one surface of the seating portion 33C'.

The battery cell 32' may be seated to be contacted on the one surface of the seated portion 33C'. The pressing portion 33D' may be formed on one surface of the seated portion 33C'.

The battery cell 32' may be seated to be contacted on the one surface of the seated portion 33C'. The supporting portion 33D' may be formed on one surface of the seated portion 33C'.

The pressing portion 33D' and the supporting portion 33E' are provided to be spaced apart from each other. The pressing portion 33D' and the supporting portion 33E' are projected to faced each other.

The pressing portion 33D' may include a plurality of projecting portions which are formed on the seating portion 33C'.

The supporting portion 33E' may include a plurality of projecting portions which are formed on the seating portion 33C'.

The pressing portion 33D' is formed to be lengthened in the perpendicular direction to the longitudinal direction of the cartridge 33'.

The supporting portion 33E' is formed to be lengthened in the perpendicular direction to the longitudinal direction of the cartridge 33'.

The pressing portion 33D' may have a rib shape. The pressing portion 33D' may have a plurality of rib shapes.

The supporting portion 33E' may be a rib shape. The supporting portion 33E' may have a plurality of rib shapes.

The pressing portion 33D' and the supporting portion 33E' may have the same shape with each other.

The pressing portion 33D' of the battery module 3' may be in contact with one end of the cooling cover 34 which is included in the battery module 3.

The supporting portion 33E' of the battery module 3' may be in contact with the other end of the cooling cover 34 which is included in the battery module 3'.

The cooling cover 34 of the battery module 3' may be positioned between the pressing portion 33D' and the supporting portion 33E' of the battery module 3'.

The gap that pressing portion 33D' and the supporting portion 33E' of the battery module 3' is spaced apart from each other may be only a length of the heat conductive plate of the cooling cover 34 included in the battery module 3'.

The cooling cover 34 included in the battery module 3' may be restricted in the longitudinal direction of the cooling cover 34 due to the pressing portion 33D' of the same battery module 3'.

The battery module 3' and the included cooling cover 34' may be restricted in the longitudinal direction of the cooling cover 34 due to the supporting portion 33E' of the same battery module 3'.

In a case where an impact is applied to the battery pack P' from the outside, the pressing portion 33D' of the battery module 3' may press one end or one side of the cooling cover 34 of the same battery module 3'. The cooling cover 34 of the battery module(3') receiving the pressure from the pressing portion 33D' of the battery module 3' may be bent as described in Fig. 13b.

In a case where an impact is applied to the battery pack P' from the outside, the pressing portion 33D' of the battery module 3' may press one end or one side of the cooling cover 34 in the same battery module 3'. The supporting portion 33E' of the battery module 3' may support the other end or the other side of the cooling cover 34' of the same battery module 3'.

Although embodiments have been described with reference to a number of illustrative embodiments thereof, it should be understood that numerous other modifications and embodiments can be devised by those skilled in the art that will fall within the scope of the claims of this disclosure.

Accordingly, embodiments disclosed in the present invention are for illustrating but not for limiting the technical scope of the present invention, and the scope of the present invention is not limited by the embodiments disclosed in the present invention, but by the appended set of claims.

## Claims

1. A battery pack in which a plurality of battery modules are stacked,
wherein at least one battery module (3) of the plurality of battery modules comprises
at least one battery cell (32) which includes a cell lead (31);
a cartridge (33) on which the battery cell (32) is mounted; and
a cooling cover (34) which is coupled to the cartridge (33) and covers the battery cell (32),
wherein the cartridge (33) comprises
a seating portion (33C) on which the battery cell (32) is seated;
wherein the cartridge (33) further comprises
a pressing portion (33D) which is formed on the seating portion (33C) and, which, when an external force is applied to the seating portion (33C), presses one end of the cooling cover (34) of the other neighboring battery modules;
a supporting portion (33E) which is formed on the seating portion (33C) to be spaced apart the pressing portion (33D) and supports the other end of the cooling cover (34) of the other neighboring battery modules,
wherein the cooling cover (34) comprises
a heat conductive plate (34B) which faces the battery cell (32); and
at least one fastening plate (34C) which is bent at the heat conductive plate (34B) and is detachably coupled with the cartridge (33),
wherein the heat conductive plate (34B) is positioned between the pressing portion (33D) and the supporting portion (33E),
wherein the pressing portion (33D) faces one end of the heat conductive plate (34B),
wherein the supporting portion (33E) faces the other end of the heat conductive plate (34B),
wherein the cooling cover (34) of the other neighboring battery modules is restricted in the longitudinal direction of the cooling cover (34) due to the pressing portion (33D) and the supporting portion (33E),
**characterized in that**
the cooling cover (34) includes at least one hole;
the hole (34D, 34E) is formed to be lengthened in the perpendicular direction to the longitudinal direction of the cooling cover (34); and
a plurality of holes (34D, 34E), formed in at least one of the fastening plates (34C) and in the heat conductive plate (34B), is spaced apart in the perpendicular direction to the longitudinal direction of the cooling cover (34).

2. The battery pack according to claim 1,
wherein the pressing portion (33D) and the supporting member (33E) is projected to face each other on one surface of the seating portion.

3. The battery pack according to claim 1 or 2,
wherein at least one of the pressing portion (33D) and the supporting portion (33E) is provided to be lengthened in the perpendicular direction to the longitudinal direction of the cartridge (33).

4. The battery pack according to any one of claims 1 to 3, wherein the battery cell (32) includes a main body (32A) and a cell lead (31) connected to the main body (32A), and
wherein a stepped portion (33F) is formed in the seating portion (33C) so that the cell lead (21) is capable of moving in a stacking direction of the battery cell (32) or in the perpendicular direction to the stacking direction of the battery cell (32).

5. The battery pack according to claim 4, wherein the stepped portion (33F) faces at least a portion of the cell lead (31).

6. The battery pack according to any one of claims 1 to 5, wherein battery cell (32) includes a first battery cell which is seated on the cartridge (33) and a second battery cell which is in contact with the cooling cover (34), and
wherein the each of the battery modules (3) further includes a secondary cartridge (36) which enters between the first battery cell and the second battery cell and then presses the first battery cell and the second battery cell, when an external force is applied to the battery module (3).

7. The battery pack according to claim 6, wherein the battery module (3) further includes a buffering member (34) which is disposed between the first battery cell and the second battery cell.

8. The battery pack according to claim 6 or 7, wherein the secondary cartridge (36) is formed to be disposed in parallel to the cartridge (33).

## Patentansprüche

1. Batteriesatz, in welchem eine Vielzahl von Batteriemodulen gestapelt ist,
wobei wenigstens ein Batteriemodul (3) der Vielzahl von Batteriemodulen umfasst
wenigstens eine Batteriezelle (32), die eine Zellleitung (31) beinhaltet;
eine Kartusche (33), auf welcher die Batteriezelle (32) befestigt ist; und
eine Kühlabdeckung (34), welche zu der Kartusche (33) gekoppelt ist und die Batteriezelle (32) bedeckt,
wobei die Kartusche (33) umfasst
einen Aufnahmeabschnitt (33C), auf welchem die Batteriezelle (32) aufgenommen wird;
wobei die Kartusche (33) weiter umfasst
einen Druckabschnitt (33D), der auf dem Aufnahmeabschnitt (33C) gebildet ist und welcher, wenn eine externe Kraft auf den Aufnahmeabschnitt (33C) aufgebracht wird, ein Ende der Kühlabdeckung (34) auf die anderen benachbarten Batteriemodule drückt;
einen Stützabschnitt (33E), der auf dem Aufnahmeabschnitt (33C) gebildet ist, sodass dieser von dem Druckabschnitt (33D) beabstandet ist, und der das andere Ende der Kühlabdeckung (34) der anderen benachbarten Batteriemodule stützt,
wobei die Kühlabdeckung (34) umfasst
eine wärmeleitende Platte (34B), die der Batteriezelle (32) zugewandt ist; und wenigstens eine Befestigungsplatte (34C), die bei der wärmeleitenden Platte (34B) gebogen und mit der Kartusche (33) gekoppelt ist,
wobei die wärmeleitende Platte (34B) zwischen dem Druckabschnitt (33D) und dem Stützabschnitt (33E) positioniert ist,
wobei der Druckabschnitt (33D) einem Ende der wärmeleitenden Platte (34B) zugewandt ist,
wobei der Stützabschnitt (33E) dem anderen Ende der wärmeleitenden Platte (34B) zugewandt ist,
wobei die Kühlabdeckung (34) der anderen benachbarten Module in der longitudinalen Richtung der Kühlabdeckung (34) durch den Druckabschnitt (33D) und den Stützabschnitt (33E) beschränkt ist,
**dadurch gekennzeichnet, dass**
die Kühlabdeckung wenigstens ein Loch beinhaltet;
das Loch (34D, 34E) länglich in der zu der longitudinalen Richtung der Kühlabdeckung (34) senkrechten Richtung ausgebildet ist; und
eine Vielzahl von Löchern (34D, 34E), die in wenigstens einer der Befestigungsplatte (34C) und in der wärmeleitenden Platte (34B) gebildet sind und die in der zu der longitudinalen Richtung der Kühlabdeckung (34) senkrechten Richtung beabstandet sind.

2. Batteriesatz nach Anspruch 1,
wobei der Druckabschnitt (33D) und das Stützteil (33E) sich gegenseitig gegenüber zugewandt auf einer Oberfläche des Aufnahmeabschnitts angeordnet sind.

3. Batteriesatz nach Anspruch 1 oder 2,
wobei wenigstens einer des Druckabschnitts (33D) und des Stützabschnitts (33E) länglich in der zu der longitudinalen Richtung der Kartusche (33) senkrechten Richtung bereitgestellt ist.

4. Batteriesatz nach einem der Ansprüche 1 bis 3,
wobei die Batteriezelle (32) einen Hauptkörper (32A) und eine zu dem Hauptkörper (3A) verbundene Zellleitung (31) beinhaltet, und
wobei ein Stufenabschnitt (33F) in dem Aufnahmeabschnitt (33C) gebildet ist, sodass es der Zellleitung (31) möglich ist, sich in einer Stapelrichtung der Batteriezelle (32) oder in der zu der Stapelrichtung der Batteriezelle (32) senkrechten Richtung zu bewegen.

5. Batteriesatz nach Anspruch 4,
wobei der Stufenabschnitt (33F) wenigstens einem Abschnitt der Zellleitung (31) zugewandt ist.

6. Batteriesatz nach einem der Ansprüche 1 bis 5,
wobei die Batteriezelle (32) eine erste Batteriezelle, die auf der Kartusche (33) aufgenommen ist, und eine zweite Batteriezelle beinhaltet, die in Kontakt mit der Kühlabdeckung (34) ist, und
wobei jede der Batteriemodule (3) weiter eine zweite Kartusche (36) beinhaltet, die zwischen der ersten Batteriezelle und der zweiten Batteriezelle eindringt und dann die erste Batteriezelle und die zweite Batteriezelle drückt, wenn eine externe Kraft auf das Batteriemodul (3) angewandt wird.

7. Batteriesatz nach Anspruch 6,
wobei das Batteriemodul (3) weiter eine Puffereinheit (34) beinhaltet, die zwischen der ersten Batteriezelle und der zweiten Batteriezelle angeordnet ist.

8. Batteriesatz nach Anspruch 6 oder 7,
wobei die zweite Kartusche (36) so geformt ist, dass diese parallel zu der Kartusche (33) angeordnet ist.

## Revendications

1. Bloc-batterie dans lequel une pluralité de modules de batterie sont empilés,
au moins un module de batterie (3) parmi la pluralité de modules de batterie comprenant
au moins un élément de batterie (32) qui comprend un fil de connexion d'élément (31) ;
une cartouche (33) sur laquelle l'élément de batterie (32) est monté ; et
un couvercle de refroidissement (34) qui est couplé à la cartouche (33) et recouvre l'élément de batterie (32),
la cartouche (33) comprenant
une partie de siège (33C) sur laquelle l'élément de batterie (32) est situé ;
la cartouche (33) comprenant en outre
une partie de pression (33D) qui est formée sur la partie de siège (33C) et qui, lorsqu'une force externe est appliquée sur la partie de siège (33C), appuie sur une extrémité du couvercle de refroidissement (34) des autres modules de batterie voisins ;
une partie de support (33E) qui est formée sur la partie de siège (33C) pour être espacée de la partie de pression (33D), et qui porte l'autre extrémité du couvercle de refroidissement (34) des autres modules de batterie voisins,
le couvercle de refroidissement (34) comprenant
une plaque de conduction de chaleur (34B) qui fait face à l'élément de batterie (32) ; et
au moins une plaque de fixation (34C) qui est courbée au niveau de la plaque de conduction de chaleur (34B) et est couplée à la cartouche (33) de manière détachable,
la plaque de conduction de chaleur (34B) étant positionnée entre la partie de pression (33D) et la partie de support (33E),
la partie de pression (33D) faisant face à une extrémité de la plaque de conduction de chaleur (34B),
la partie de support (33E) faisant face à l'autre extrémité de la plaque de conduction de chaleur (34B),
le couvercle de refroidissement (34) des autres modules de batterie voisins étant restreint dans la direction longitudinale du couvercle de refroidissement (34) en raison de la partie de pression (33D) et de la partie de support (33E),
**caractérisé par le fait que**
le couvercle de refroidissement (34) comprend au moins un trou ;
le trou (34D, 34E) est formé pour être allongé dans la direction perpendiculaire à la direction longitudinale du couvercle de refroidissement (34) ; et
une pluralité de trous (34D, 34E), formés dans au moins une des plaques de fixation (34C) et dans la plaque de conduction de chaleur (34B), sont espacés dans la direction perpendiculaire à la direction longitudinale du couvercle de refroidissement (34).

2. Bloc-batterie selon la revendication 1,
dans lequel la partie de pression (33D) et l'élément de support (33E) font saillie pour se faire mutuellement face sur une surface de la partie de siège.

3. Bloc-batterie selon la revendication 1 ou 2,
dans lequel au moins l'une de la partie de pression (33D) et la partie de support (33E) est destinée à être allongée dans la direction perpendiculaire à la direction longitudinale de la cartouche (33).

4. Bloc-batterie selon l'une quelconque des revendications 1 à 3, dans lequel
l'élément de batterie (32) comprend un corps principal (32A) et un fil de connexion d'élément (31) relié au corps principal (32A), et
une partie étagée (33F) est formée dans la partie de siège (33C) de telle sorte que le fil de connexion d'élément (21) est apte à se déplacer dans une direction d'empilement de l'élément de batterie (32) ou dans la direction perpendiculaire à la direction d'empilement de l'élément de batterie (32).

5. Bloc-batterie selon la revendication 4,
dans lequel la partie étagée (33F) fait face à au moins une partie du fil de connexion d'élément (31).

6. Bloc-batterie selon l'une quelconque des revendications 1 à 5, dans lequel
l'élément de batterie (32) comprend un premier élément de batterie qui est situé sur la cartouche (33) et un second élément de batterie qui est en contact avec le couvercle de refroidissement (34), et
chacun des modules de batterie (3) comprend en outre une cartouche secondaire (36) qui pénètre entre le premier élément de batterie et le second élément de batterie, puis appuie sur le premier élément de batterie et le second élément de batterie, lorsqu'une force externe est appliquée sur le module de batterie (3).

7. Bloc-batterie selon la revendication 6,
dans lequel le module de batterie (3) comprend en outre un élément tampon (34) qui est disposé entre le premier élément de batterie et le second élément de batterie.

8. Bloc-batterie selon la revendication 6 ou 7,
dans lequel la cartouche secondaire (36) est formée pour être disposée parallèlement à la cartouche (33).
